# EUROPEAN PATENT APPLICATION

(11) **EP 4 722 459 A1**
(43) Date of publication of application: **08.04.2026**
(21) Application number: 24815006.2
(22) Date of filing: 16.04.2024
(51) Int. Cl.: E03B 1/00, C02F 1/00

(54) **INDEPENDENT WATER USAGE SYSTEM**

(30) Priority: 31.05.2023 JP 2023089933
(71) Applicant: KUBOTA CORPORATION, Osaka-shi, Osaka 556-8601 (JP)
(72) Inventor: MATSUMOTO, Ken, Sakai-shi, Osaka 590-0908 (JP); SUGIYAMA, Sho, Sakai-shi, Osaka 590-0908 (JP); HOSODA, Shogo, Sakai-shi, Osaka 590-0908 (JP); TANAKA, Noriyuki, Sakai-shi, Osaka 590-0908 (JP)
(74) Representative: D Young & Co LLP
(86) International application number: PCT/JP2024/015116
(87) International publication number: WO 2024/247519

(57) **Abstract**

Provided is a highly convenient independent water use system (101 to 106). The independent water use system (101 to 106) is for water use for one or more specific water demand facilities (20, 20a, 20b, 40, 40a to 40d), and includes a clean water generator (10), a clean water pipe (11a to 11d, 11) to allow clean water generated by the clean water generator (10) to flow to the clean water demand facility (20, 20a, 20b), a first drainage water pipe (21a, 21c, 21d) to allow first drainage water, resulting from usage of the clean water in the clean water demand facility (20, 20a, 20b), to flow therethrough; a purifier (30, 30x, 30y) connected to the first drain pipe (21a, 21c, 21d) to purify the first drainage water, and a recycled water pipe (31a to 3 If, 31) to allow recycled water obtained by purification of the first drainage water by the purifier (30, 30x, 30y) to flow to recycled water demand facility (40, 40a to 40d).

## Description

### Technical Field

The present invention relates to independent water use systems for water use for specific water demand facilities.

### Background Art

Patent Literature 1 discloses a circulating water use system designed for a specific area. The circulating water use system includes a closed loop circulation passage in which circulating water flows in one direction, a release passage connected to the closed loop circulation passage to allow effluent water to flow into a circulation passage 2 from a water demand body including an assembly of a plurality of small water demand bodies including at least one of residence(s), tenant(s) or office(s) using circulating water that flows through the circulation passage, a purifying means connected to the closed loop circulation passage to purify circulating water which includes effluent water flowing through the circulation passage, and a supply passage provided upstream of the junction of the passage at the closed loop circulation passage and branching from a location downstream of the purifying means to allow circulating water purified by the purifying means to flow to the water demand body.

### Citation List

### Patent Literature

[Patent Literature 1] Japanese Patent No. 5705936

### Summary of Invention

### Technical Problem

In a circulating water use system such as that disclosed in Patent Literature 1, tap water that has been conveyed from a waterworks system is necessary as raw water for the circulating water to flow in the circulation passage, and therefore it is not possible to use such a water use system in areas with no waterworks systems. This is inconvenient.

The present invention was made in view of the above issue of such related techniques, and an object of the present invention is to provide independent water use systems that are highly convenient.

### Solution to Problem

In order to attain the above object, the present invention provides an independent water use system for water use for one or more specific water demand facilities, including a clean water generator, a clean water pipe to allow clean water generated by the clean water generator to flow to a clean water demand facility, a first drainage water pipe to allow first drainage water, resulting from usage of the clean water in the clean water demand facility, to flow therethrough, a purifier connected to the first drainage water pipe to purify the first drainage water, and a recycled water pipe to allow the recycled water obtained by purification of the first drainage water by the purifier to flow to a recycled water demand facility. Note that the clean water demand facility may be a facility where water is in direct contact with a person such as, for example, a kitchen or a bathroom of a residence. The recycled water demand facility may be a facility where water is not in direct contact with a person such as, for example, a toilet or a washing machine.

In an example embodiment of the present invention, the independent water use system may include a second drainage water pipe to allow second drainage water, resulting from usage of the recycled water in the recycled water demand facility, to flow to the purifier. The independent water use system may include a release pipe to allow at least one of the clean water or the recycled water to be released from the independent water use system.

In an example embodiment of the present invention, the independent water use system may include a clean water storage tank connected to the clean water pipe to store the clean water. The independent water use system may include a clean water outflow pipe to allow the clean water stored in the clean water storage tank to outflow to somewhere other than the clean water demand facility, and a clean water outflow device to adjust an outflow rate of the clean water through the clean water outflow pipe. Note that the clean water outflow device may be, for example, a clean water outflow pump provided inside the clean water storage tank or the clean water outflow pipe, and a clean water outflow valve provided in the clean water outflow pipe, or a combination of these. Examples of purposes other than for supplying water to flow to the clean water demand facility include draining water to lower the water level of the clean water stored in the clean water storage tank, using water as recycled water, using water as firefighting water, and using water as sprinkling water.

In an example embodiment of the present invention, the independent water use system may include a recycled water storage tank connected to the recycled water pipe to store the recycled water. The clean water outflow pipe may be configured to allow the clean water stored in the clean water storage tank to outflow to the recycled water storage tank. The independent water use system may include a clean water state detector to detect a state including at least one of a quality or a water level of the clean water stored in the clean water storage tank. The clean water outflow device may be configured to adjust the outflow rate of the clean water based on the state of the clean water detected by the clean water state detector. For example, a worker may manually adjust the outflow rate of the clean water based on the state of the clean water detected by the clean water state detector. Alternatively, a controller to automatically control starting and stopping the operation of the clean water outflow device may be provided, and the controller may automatically adjust the outflow rate of the clean water.

In an example embodiment of the present invention, the clean water generator may be configured to adjust an amount of the clean water generated based on the state of the clean water detected by the clean water state detector. For example, the worker may manually adjust the amount of the clean water generated based on the state of the clean water detected by the clean water state detector. Alternatively, a controller to automatically control starting and stopping of the operation of the clean water generator may be provided, and the controller may automatically adjust the amount of the clean water generated. The clean water state detector may include at least one of (i) a clean water level gauge to detect the water level of the clean water stored in the clean water storage tank or (ii) a clean water quality meter to detect the quality of the clean water. The quality of the clean water includes, for example, a water temperature, a color, a turbidity, or a pH.

In an example embodiment of the present invention, the independent water use system may include a plurality of clean water storage tanks connected to the clean water pipe to store the clean water, and a plurality of clean water inlet devices corresponding to the respective plurality of clean water storage tanks and a plurality of clean water outlet devices corresponding to the respective plurality of clean water storage tanks. The plurality of clean water inlet devices may each be configured to adjust a flow rate of the clean water to flow into a corresponding one of the clean water storage tanks, and the plurality of clean water outlet devices may each be configured to adjust the flow rate of the clean water to flow out of a corresponding one of the plurality of clean water storage tanks. Note that the clean water inlet devices may be, for example, clean water inflow pumps provided in clean water pipes extending from the clean water generator and the clean water storage tanks, clean water inflow valves provided in the clean water pipes, or a combination of them. The clean water outlet devices may be, for example, clean water outflow pumps provided in the clean water storage tanks or clean water outflow pipe(s), clean water outflow valves provided in clean water outflow pipe(s), or a combination of them.

In an example embodiment of the present invention, the independent water use system may include a chlorine addition unit to add chlorine to the clean water. The chlorine addition unit may be, for example, an addition port or a hopper for addition that is provided in the clean water pipe extending from the clean water generator to the clean water demand facility. The clean water demand facility may be provided at a residence, and the clean water may be at least used as drinking water. The clean water may be used as water for cooking in addition to or instead of drinking water. The clean water pipe may be configured to allow the clean water to flow to a plurality of the clean water demand facilities, and the independent water use system may further include clean water supply amount regulator(s) to adjust flow rates of the clean water to be supplied to the respective plurality of clean water demand facilities independently of each other. Note that the clean water supply amount regulator may be, for example, a clean water supply pump provided in a clean water pipe extending from the clean water generator to a clean water demand facility, a clean water supply valve provided in the clean water pipe, or a combination of them .

In an example embodiment of the present invention, the independent water use system may include a recycled water storage tank connected to the recycled water pipe to store the recycled water. The independent water use system may include a recycled water outflow pipe to allow the recycled water stored in the recycled water storage tank to outflow to somewhere other than the recycled water demand facility, and a recycled water outflow device to adjust an outflow rate of the recycled water through the recycled water outflow pipe. Examples of purposes other than for supplying water to the recycled water demand facility include draining water to lower the level of the recycled water stored in the recycled water storage tank, using water as firefighting water, and using water as sprinkling water.

In an example embodiment of the present invention, the independent water use system may include a recycled water state detector to detect a state including at least one of a quality or a water level of the recycled water stored in the recycled water storage tank. The recycled water outflow device may be configured to adjust an outflow rate of the recycled water based on the state of the recycled water detected by the recycled water state detector. Note that the recycled water outflow device may be, for example, a recycled water outflow pump provided inside the recycled water storage tank or the recycled water outflow pipe, a recycled water outflow valve provided in the recycled water outflow pipe, or a combination of them. For example, a worker may manually adjust the flow rate of the recycled water based on the state of the recycled water detected by the recycled water state detector. Alternatively, a controller to automatically control starting and stopping of the operation of the recycled water outflow device may be provided, and the controller may automatically adjust the flow rate of the recycled water.

In an example embodiment of the present invention, the purifier may be configured to adjust an amount of the recycled water purified thereby based on the state of the recycled water detected by the recycled water state detector. Note that a worker may manually adjust the flow rate of the recycled water to be purified based on the state of the recycled water detected by the recycled water state detector. Alternatively, a controller to automatically control starting and stopping of the operation of the purifier may be provided, and the controller may automatically adjust the flow rate of the recycled water to be purified. The recycled water state detector may include at least one of (i) a recycled water level gauge to detect the water level of the recycled water stored in the recycled water storage tank or (ii) a recycled water quality meter to detect the quality of the recycled water. Note that the quality of the recycled water includes, for example, a water temperature, a color, a turbidity, or a pH.

In an example embodiment of the present invention, the independent water use system may include a plurality of recycled water storage tanks connected to the recycled water pipe to store the recycled water, and a plurality of recycled water inlet devices corresponding to the respective plurality of recycled water storage tanks and a plurality of recycled water outlet devices corresponding to the respective plurality of recycled water storage tanks. The plurality of recycled water inlet devices may each be configured to adjust the flow rate of the recycled water to flow into a corresponding one of the plurality of recycled water storage tanks, and the plurality of recycled water outlet devices may each be configured to adjust the flow rate of the recycled water to flow out of a corresponding one of the plurality of recycled water storage tanks. Note that the recycled water inlet device may be, for example, a recycled water inflow pump provided in a recycled water pipe extending from the purifier to a recycled water storage tank, a recycled water inflow valve provided in the recycled water pump, or a combination of them. The recycled water outlet device may be, for example, a recycled water outflow pump provided inside the recycled water storage tank or in the recycled water outflow pipe, a recycled water outflow valve provided in the recycled water outflow pipe, or a combination of them.

In an example embodiment of the present invention, the purifier may include a recycled water disinfecting tank to disinfect the recycled water. The purifier may include an eliminator to eliminate impurities contained in the recycled water. For example, a reverse osmosis membrane or the like may be used as the eliminator.

In an example embodiment of the present invention, the recycled water demand facility may be provided at a residence, and the recycled water may be used as at least one of washing water, toilet flushing or sprinkling water. Each of the recycled water pipes may be configured to allow the recycled water to flow to each of a plurality of the recycled water demand facilities, and the independent water use system may further include recycled water supply amount regulators to adjust flow rates of the recycled water to be supplied to the respective plurality of recycled water demand facilities independently of each other. Note that the recycled water supply amount regulators may be, for example, recycled water supply pumps provided in recycled water pipes extending from the purifier to the recycled water demand facilities, recycled water supply valves in the recycled water pipes, or a combination of them.

In an example embodiment of the present invention, the independent water use system may be configured such that heat generated when the clean water generator generates the clean water is used to heat the clean water, the recycled water, or the purifier. For example, heat generated by the clean water generator may be allowed to be directly transferred (thermal conduction) to the clean water or the recycled water by providing the clean water pipe and the recycled water pipe in the vicinity of the clean water generator. Alternatively, the clean water or the recycled water may be heated by using a heat exchanger to exchange heat between (i) the clean water generator and (ii) the clean water or the recycled water. At least one of the clean water or the recycled water may be used as firefighting water.

In an example embodiment of the present invention, the independent water use system may include a clean water use meter to measure an amount of the clean water used in the clean water demand facility, and a fee calculator to calculate a fee for usage of the clean water used based on the amount of the clean water used. The independent water use system may include a recycled water use meter to measure an amount of the recycled water used in the recycled water demand facility, and a fee calculator to calculate a fee for usage of the recycled water based on the amount of the recycled water used. The fee calculator may calculate a fee for usage of the whole independent water use system based on the amount of the clean water used measured by the clean water use meter and the amount of the recycled water used measured by the recycled water use meter.

In an example embodiment of the present invention, the independent water use system may include a release water meter to measure an amount of a portion of the clean water and the recycled water that is released from the independent water use system, and a fee calculator to calculate a fee for release based on the amount of the portion of the clean water and the recycled water that is released. The fee calculator may calculate a fee for usage of the independent water use system based on the amount of the clean water used measured by the clean water use meter, the amount of the recycled water used measured by the recycled water use meter, and the amount of the portion of the clean water and the recycled water that is released measured by the release water meter.

### Advantageous Effects of Invention

With the present invention, since clean water generated from air is used and the used water, i.e., drainage water, is purified and reused as recycled water even in areas with no waterworks systems or the like, it is possible to use an amount of water more than the clean water generated, making it possible to provide a highly convenient independent water use system.

### Brief Description of Drawings

[FIG. 1] FIG. 1 is a block diagram of an independent water use system according to a first example embodiment.
[FIG. 2] FIG. 2 is a block diagram of an example of a purifier.
[FIG. 3] FIG. 3 is a block diagram of a controller and devices connected to the controller.
[FIG. 4] FIG. 4 is a block diagram of an independent water use system according to a second example embodiment.
[FIG. 5] FIG. 5 is a block diagram of an independent water use system according to a third example embodiment.
[FIG. 6] FIG. 6 is a block diagram of an independent water use system according to a fourth example embodiment.
[FIG. 7] FIG. 7 is a block diagram of an independent water use system according to a fifth example embodiment.
[FIG. 8] FIG. 8 is a block diagram of an independent water use system according to a sixth example embodiment.

### Description of Embodiments

The following describes embodiments of independent water use systems according to the present invention with reference to drawings.

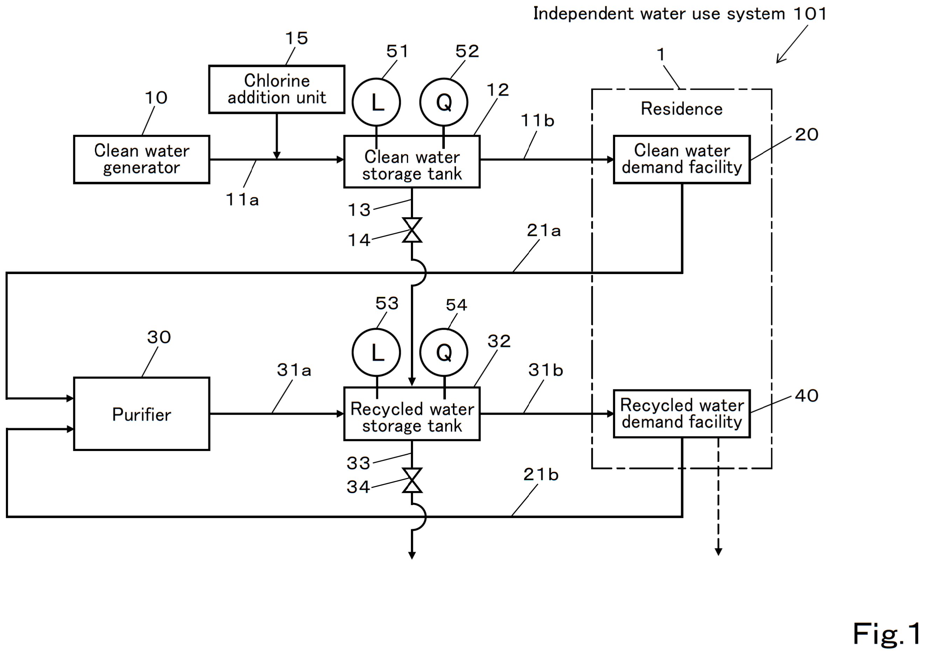

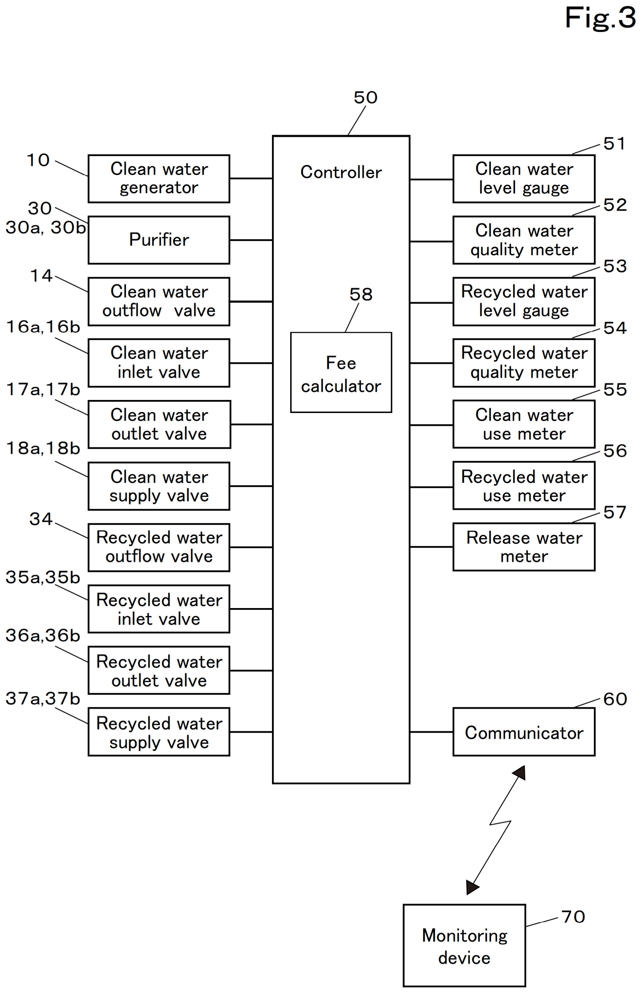

FIG. 1 is a block diagram of an independent (or stand-alone) water use system 101 according to a first example embodiment. The independent water use system 101 is configured for water use for, for example, one or more water demand facilities provided at residence(s) 1 (specific water demand facilities). (The same applies to independent water use systems 102 to 106 described later.) The independent water use system 101 includes a clean water generator 10, a clean water storage tank 12, a clean water demand facility 20, a purifier 30, a recycled water storage tank 32, a recycled water demand facility 40, a controller 50 (see FIG. 3) to automatically control the operation of the independent water use system 101, and/or the like.

The clean water generator 10 is configured to generate clean water by, for example, allowing the moisture in the air to condense or causing the moisture in the air to be adsorbed by a solid or liquid drying agent and then allowing the adsorbed moisture to be desorbed while heating and pressurizing, and removing dust, dirt and/or the like via a filter. The generated clean water is clean to the extent that it can be used as drinking water.

The clean water generator 10 and the clean water storage tank 12 are connected to each other by a first clean water pipe 11a. The clean water generated by the clean water generator 10 is supplied to the clean water storage tank 12 via the first clean water pipe 11a. The clean water storage tank 12 temporarily stores the clean water generated by the clean water generator 10.

The clean water storage tank 12 and the clean water demand facility 20 are connected to each other by a second clean water pipe 11b. The clean water stored in the clean water storage tank 12 is supplied to the clean water demand facility 20 via the second clean water pipe 11b. Note that pump(s) and/or valve(s) (not illustrated) to be controlled by the controller 50 may be provided in at least one of the first clean water pipe 11a or the second clean water pipe 11b.

The clean water demand facility 20 is a facility where water is in direct contact with persons, such as a kitchen or a bathroom of a residence 1. Accordingly, the clean water is used as drinking water and water for cooking. With the clean water storage tank 12 provided between the clean water generator 10 and the clean water demand facility 20, it is possible to use clean water according to the demand of the clean water demand facility 20.

The clean water demand facility 20 and the purifier 30 are connected to each other by a first drainage water pipe 21a. First drainage water, which results from the usage of clean water in the clean water demand facility 20 and is drained from the clean water demand facility 20, is supplied to the purifier 30 via the first drainage water pipe 21a. The first drainage water pipe 21a may be provided with pump(s) and valve(s) (not illustrated) to be controlled by the controller 50. The purifier 30 generates recycled water by purifying drainage water.

The purifier 30 and the recycled water storage tank 32 are connected to each other by a first recycled water pipe 31a. Recycled water generated by purification by the purifier 30 is supplied to the recycled water storage tank 32 via the first recycled water pipe 31a. The recycled water storage tank 32 temporarily stores the recycled water generated by the purifier 30.

The recycled water storage tank 32 and the recycled water demand facility 40 are connected to each other by a second recycled water pipe 31b. The recycled water stored in the recycled water storage tank 32 is supplied to the recycled water demand facility 40 via the second recycled water pipe 31b. Note that pump(s) and/or valve(s) (not illustrated) to be controlled by the controller 50 may be provided in at least one of the first recycled water pipe 31a or the second recycled water pipe 31b.

The recycled water demand facility 40 is a facility where water is not in direct contact with persons, such as a toilet or a washing machine, and is provided at the residence 1. The purifier 30, the recycled water storage tank 32 and/or the like may be provided with at least one aftertreatment device such as a UV irradiator to irradiate the recycled water with ultraviolet light (UV), an ozone generator or a reverse osmosis membrane. The recycled water demand facility 40 may be a sprinkling facility to sprinkle water on a car, a garden or the like. Accordingly, the recycled water is used as at least one of washing water, toilet flushing or sprinkling water.

The recycled water demand facility 40 and the purifier 30 are connected by a second drainage water pipe 21b. Second drainage water, which results from the usage of the recycled water in the recycled water demand facility 40 and is drained from the recycled water demand facility 40, is supplied to the purifier 30 via the second drainage water pipe 21b. The second drainage water pipe 21b may be provided with pump(s) and valve(s) (not illustrated) to be controlled by the controller 50. When the recycled water demand facility 40 is a water sprinkling facility, water used in the water sprinkling facility is allowed to flow out of the system (see the broken line arrow extending from the recycled water demand facility 40 in FIG. 1), e.g., infiltrates the soil or flows into a gutter.

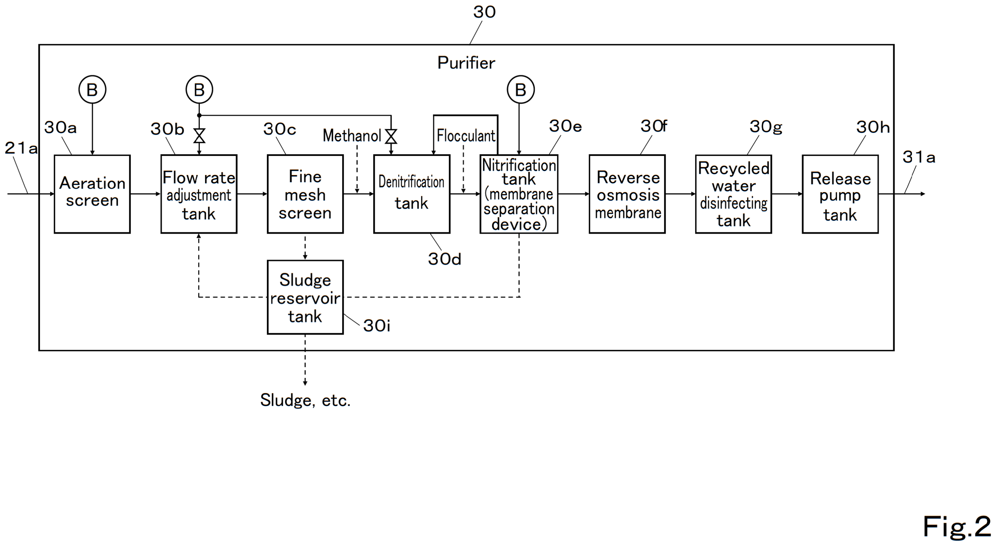

FIG. 2 is a block diagram of an example of the purifier 30. The purifier 30 includes an aeration screen 30a, a flow rate adjustment tank 30b, a fine mesh screen 30c, a denitrification tank 30d, a nitrification tank 30e, a reverse osmosis membrane 30f, a recycled water disinfecting tank 30g, a release pump tank 30h, a sludge storage tank 30i and/or the like. The aeration screen 30a removes impurities included in the first drainage water supplied via the first drainage water pipe 21a and in the second drainage water supplied via the second drainage water pipe 21b. The flow rate adjustment tank 30b stores treated water discharged from the aeration screen 30a. The fine mesh screen 30c removes fine impurities included in the treated water discharged at a regulated flow rate from the flow rate adjustment tank 30b.

The treated water flowed out of the fine mesh screen 30c passes through the denitrification tank 30d and flows into the nitrification tank 30e. The treated water nitrified in the nitrification tank 30e is returned by pump(s) or the like to the denitrification tank 30d. The denitrification tank 30d removes nitrogen, via denitrification, from the treated water returned from the nitrification tank 30e. The reverse osmosis membrane 30f is an eliminator to remove impurities contained in the treated water flowed out of the nitrification tank 30e. The recycled water disinfecting tank 30g disinfects the treated water discharged from the reverse osmosis membrane 30f. The release pump tank 30h releases recycled water disinfected in the recycled water disinfecting tank 30g to the recycled water storage tank 32. The sludge storage tank 30i stores sludge from the nitrification tank 30e and residue (which may include brine) from the fine mesh screen 30c and/or the like. The sludge and/or the like stored in the sludge storage tank 30i is recovered by a waste disposing worker, for example, after the sludge and/or the like has been stored in a predetermined waste water tank.

The reverse osmosis membrane 30f, for example, of the elements of the purifier 30, does not need to be included in the purifier 30. In such a case, the recycled water disinfecting tank 30g disinfects the treated water discharged from the nitrification tank 30e. The purifier 30 may include an aftertreatment device such as an ozone generator and/or an activated carbon filter instead of or in addition to the reverse osmosis membrane 30f. The purifier 30 is not limited to the above-described configuration, and may include another configuration.

FIG. 3 is a block diagram of the controller 50 and devices electrically connected to the controller 50. The controller 50 includes a CPU, a nonvolatile memory such as a ROM or an EEPROM, a nonvolatile memory such as a RAM, a communication interface, and/or the like. The controller 50 is configured or programmed such that the CPU reads control program(s) stored in the ROM and performs a predetermined control. The controller 50 is configured or programmed such that, when the CPU performs a predetermined control, various data and information are read from and written into the RAM.

The controller 50 is, as shown in FIG. 3, electrically connected to the clean water generator 10, the purifier(s) 30, 30x, 30y, valve(s) 14, 16a, 16b, 17a, 17b, 18a, 18b, 35a, 35b, 36a, 36b, 37a, 37b, 44, 45, water level gauge(s) 51, 53, water quality meter(s) 52, 54, 43, water use meter(s) 55 to 57, a communicator 60 and/or the like. Note that one or more of these devices are not essential in some cases.

As shown in FIG. 1, the clean water storage tank 12 includes a clean water level gauge 51 and a clean water quality meter 52 as clean water state detectors. The clean water level gauge 51 detects the water level of the clean water stored in the clean water storage tank 12. The clean water quality meter 52 detects the quality of the clean water stored in the clean water storage tank 12. The quality of clean water includes, for example, water temperature, color, turbidity, pH., and/or the like.

The clean water storage tank 12 and the recycled water storage tank 32 are connected by a clean water outflow pipe 13. The clean water outflow pipe 13 is provided with a clean water outflow valve 14 as a clean water outflow device. The clean water outflow valve 14 includes a flow rate adjustment valve. For example, by the controller 50 controlling the opening and closing of the clean water outflow valve 14, it is possible to adjust (regulate) the outflow rate of the clean water through the clean water outflow pipe 13.

FIG. 1 illustrates an example in which the clean water outflow valve 14 is provided outside the clean water storage tank 12 as a clean water outflow device, but the clean water outflow device may include a clean water outflow valve, a clean water outflow pump and/or the like provided inside or on the wall of the clean water storage tank 12, in addition to or instead of the clean water outflow valve 14. Instead of or in addition to the clean water outflow valve 14, a clean water outflow pump to adjust the flow rate of the clean water may be provided in the clean water outflow pipe 13 as a clean water outflow device depending on, for example, the slope of the clean water outflow pipe 13. The driving of the clean water outflow pump is also controlled by the controller 50.

The controller 50 is configured or programmed to adjust the amount of the clean water generated by the clean water generator 10 or the outflow rate of the clean water through the clean water outflow valve 14 according to the water level in the clean water storage tank 12 detected by the clean water level gauge 51. Specifically, the controller 50 is configured or programmed to control the operation of the clean water generator 10 to increase the amount of the clean water generated when, for example, the water level in the clean water storage tank 12 is lower than a predetermined first water level.

The controller 50 is configured or programmed to control the opening and closing of the clean water outflow valve 14 to increase the outflow rate of the clean water from the clean water storage tank 12 when, for example, the water level of the clean water storage tank 12 is higher than a predetermined second water level, because discharge of the clean water should be promoted. In so doing, the amount of the clean water generated by the clean water generator 10 may be maintained, or the controller 50 may control the operation of the clean water generator 10 or a worker may control the clean water generator 10 to reduce the amount of the clean water generated. Note that the second water level is set to be higher than the first water level. The operation of the clean water generator 10 and the opening and closing of the clan water outflow valve 14 are not limited to being automatically controlled by the controller 50, and may manually controlled by a worker.

The controller 50 is configured or programmed to control the amount of the clean water generated or the outflow rate of the clean water according to the quality of the clean water in the clean water storage tank 12 detected by the clean water quality meter 52. Specifically, the controller 50 is configured or programmed to perform at least one of (i) a control of the operation of the clean water generator 10 to increase the amount of the clean water generated or (ii) a control of the opening and closing of the clean water outflow valve 14 to increase the outflow rate of the clean water from the clean water storage tank 12, when, for example, the quality of the clean water in the clean water storage tank 12 is lower than a predetermined water quality (when a quality value of the clean water is lower than a predetermined first water quality value). That is, low-quality clean water in the clean water storage tank 12 is replaced with high-quality clean water. Also in such a case, the operation of the clean water generator 10 and the opening and closing of the clean water outflow valve 14 are not limited to being automatically controlled by the controller 50, and may be manually controlled by a worker.

It is possible to appropriately supply the clean water stored in the clean water storage tank 12 to the recycled water storage tank 32 by providing the clean water outflow pipe 13 and the clean water outflow valve 14 between the clean water storage tank 12 and the recycled storage tank 32. For example, when an increased amount of the recycled water in the recycled water storage tank 32 is demanded (described later), the clean water flowed out through the clean water outflow pipe 13 can be used to compensate for the insufficiency of the recycled water. Since the clean water is cleaner than the recycled water, it is possible to, when the state of the recycled water in the recycled water storage tank 32 has deteriorated (when the water quality has decreased and/or the like), dilute the recycled water with the clean water that has outflowed via the clean water outflow pipe 13 and improve the state of the recycled water.

Note that the clean water outflow pipe 13 may branch at an intermediate portion thereof or may be connected to at least one of the clean water pipe 11a or the clean water pipe 11b instead of the clean water storage tank 12, such that clean water is discharged (released) out of the system (out of the independent water use system 101). In such a case, the clean water outflow pipe 13 defines a release pipe to allow the clean water to be released out of the independent water use system. The clean water flowing to the clean water outflow pipe 13 may be used as firefighting water or sprinkling water. When the clean water is used as firefighting water in this manner, the clean water storage tank 12 may be used also as a firefighting water storage tank, and additional device(s) such as a UV irradiator may be provided in or on the clean water storage tank 12 and/or the like.

The recycled water storage tank 32 includes the recycled water level gauge 53 and the recycled water quality meter 54 as recycled water state detectors. The recycled water level gauge 53 detects the water level of the recycled water stored in the recycled water storage tank 32. The recycled water quality meter 54 detects the quality of the recycled water stored in the recycled water storage tank 32. Note that the quality of the recycled water includes, for example, water temperature, color, turbidity, pH, and/or the like.

A recycled water outflow pipe 33 is connected to the recycled water storage tank 32. The recycled water outflow pipe 33 is provided with a recycled water outflow valve 34 as a recycled water outflow device. The recycled water outflow valve 34 includes a flow rate adjustment valve. For example, by the controller 50 controlling the opening and closing of the recycled water outflow valve 34, it is possible to adjust the outflow rate of the recycled water through the recycled water outflow pipe 33.

FIG. 1 illustrates the recycled water outflow valve 34 provided outside the recycled water storage tank 32 as an example of a recycled water outflow device, but the recycled water outflow device may include a recycled water outflow valve or a recycled water outflow pump provided inside of or on the wall of the recycled water storage tank 32, in addition to or instead of the recycled water outflow valve 34. Instead or in addition to the recycled water outflow valve 34, a recycled water outflow pump to adjust the flow rate of the recycled water may be provided in the recycled water outflow pipe 33 as a recycled water outflow device depending on, for example, the slope of the recycled water outflow pipe 33. The driving of the recycled water outflow pump is also controlled by the controller 50.

The controller 50 is configured or programmed to adjust the inflow rate or the outflow rate of the clean water or the recycled water with respect to the recycled water storage tank 32 according to the water level in the recycled water storage tank 32 detected by the recycled water level gauge 53. Specifically, the controller 50 is configured or programmed to perform at least one of (i) a control of the operation of the purifier 30 to increase the amount of the recycled water purified or (ii) a control of the opening and closing of the clean water outflow valve 14 to increase the amount of the clean water supplied to the recycled water storage tank 32, when, for example, the water level of the recycled water storage tank 32 is lower than a predetermined third water level.

The controller 50 is configured or programmed to, when the water level of the recycled water storage tank 32 is higher than a predetermined fourth water level, determine that the discharge of the recycled water should be promoted, and control the opening and closing of the recycled water outflow valve 34 to increase the outflow rate of the recycled water from the recycled water storage tank 32 . Note that the fourth water level is set to be higher than the third water level. The operation of the purifier 30 and the opening and closing of the clean water outflow valve 14 and the recycled water outflow valve 34 are not limited to being automatically controller by the controller 50, and may be manually controlled by a worker.

The controller 50 is configured or programmed to adjust the inflow rate or the outflow rate of the clean water or the recycled water with respect to the recycled water storage tank 32 according to the quality of the water in the recycled water storage tank 32 detected by the recycled water quality meter 54. Specifically, the controller 50 is configured or programmed to perform at least one of (i) a control of the operation of the purifier 30 to increase the amount of the recycled water, (ii) a control of the opening and closing of the clean water outflow valve 14 to adjust the amount of the clean water supplied to the recycled water storage tank 32, or (iii) a control of the opening and closing of the recycled outflow valve 34 to adjust the outflow rate of the recycled water from the recycled water storage tank 32, when, for example, the water level of the recycled water storage tank 32 is lower than a predetermined water quality (when a water quality value of the recycled water is lower than a second water quality value). That is, low-quality clean water in the recycled water storage tank 32 is replaced with high-quality clean water. Note that the operation of the purifier 30 and the opening and closing of the clean water outflow valve 14 and the recycled water outflow valve 34 are not limited to being automatically controlled by the controller 50, and may be manually controlled by a worker.

The recycled water outflow pipe 33 and the recycled water outflow valve 34 (recycled water outflow device) make it possible to use the recycled water stored in the recycled water storage tank 32 other than for supplying the recycled water to the recycled water demand facility 40. Examples of the purposes other than supplying water to the recycled water demand facility 40 or the like include releasing water out of the system to reduce the water level of the recycled water stored in the recycled water storage tank 32, using the recycled water as firefighting water, and using the recycled water as sprinkling water sprinkled to yards or the like. In such cases, the recycled water outflow pipe 33 defines a release pipe to allow the recycled water to be released out of the independent water use system. The recycled water having passed through the recycled water outflow pipe 33 may be released, for example, into a drainage pond, a river, or the like. In the case where the recycled water is used as firefighting water, the recycled water storage tank 32 may also be used as a firefighting water storage tank, and additional device(s) such as a UV irradiator for firefighting water may be provided in or on the recycled water storage tank 32, the purifier 30, and/or the like. Note that the recycled water outflow pipe 33 may branch at an intermediate portion thereof or may be connected to at least one of the recycled water pipe 31a or 31b instead of the recycled water storage tank 32, such that the recycled water is released out of the system.

With the configuration of the above-described independent water use system 101, the clean water generated by the clean water generator 10 is used in the clean water demand facility 20, then first drainage water from the clean water demand facility 20 is purified by the purifier 30 to obtain recycled water, and the recycled water is then reused in the recycled water demand facility 40, making it possible to use water in an amount greater than the amount of water generated by the clean water generator 10. Furthermore, since second drainage water from the recycled water demand facility 40 is also purified by the purifier 30 to obtain recycled water and the recycled water is reused in the recycled water demand facility 40, i.e., the recycled water is cyclically used, it is possible to make more effective use of water generated by the clean water generator 10.

The first clean water pipe 11a or the second clean water pipe 11b may be provided with a chlorine addition unit 15 to add chlorine to the clean water. The chlorine addition unit 15 includes, for example, an addition port. The addition of chlorine to the clean water from the chlorine addition unit 15 makes it possible to disinfect the clean water. Note that the chlorine addition unit 15 may include not only the addition port in the clean water pipe 11 but also a hopper and/or the like to store a chlorine agent in communication with the addition port. The chlorine addition unit 15 may be included in the clean water storage tank 12.

Since the clean water generator 10 uses heat when generating the clean water, the main body of the clean water generator 10 becomes hot. At least one of the first clean water pipe 11a, the first drainage water pipe 21a or the first recycled water pipe 31a may be provided in the vicinity of the main body of the clean water generator 10 to heat at least one of the clean water, the drainage water or the recycled water using the heat from the clean water generator 10. The purifier 30 may be provided in the vicinity of the clean water generator 10 such that the purifier 30 is heated by the heat from the clean water generator 10 to improve its efficiency to purify the drainage water. Heat exchanger(s) may be provided between (i) the clean water generator 10 and (ii) the first clean water pipe 11a, the first drainage water pipe 21a, the first recycled water pipe 31a or the purifier 30, in order to more efficiently heat the clean water, the first drainage water, the recycled water or the purifier 30.

The independent water use system 101 may include all of the clean water use meter 55, the recycled water use meter 56 and the release water meter 57 as illustrated in FIG. 3. Alternatively, the independent water use system 101 may selectively include at least one of the water meters 55 to 57. The clean water use meter 55 includes a water meter provided, for example, at the second clean water pipe 11b or the first drainage water pipe 21a. The clean water use meter 55 measures the amount of the clean water used in the clean water demand facility 20. The recycled water use meter 56 includes a water meter provided, for example, at the second recycled water pipe 31b or the second drainage water pipe 21b. The recycled water use meter 56 measures the amount of the recycled water used in the recycled water demand facility 40.

The controller 50 includes a fee calculator 58. The fee calculator 58 may include hardware such as a CPU or an ASIC included in the controller 50 or software program(s) to be executed by the CPU. The fee calculator 58 calculates a fee for usage of the clean water based on the amount of the clean water used measured by the clean water use meter 55. The fee calculator 58 calculates a fee for usage of the recycled water based on the amount of the recycled water used measured by the recycled water use meter 56.

The fee calculator 58 may calculate a fee for usage of the whole independent water use system 101 based on the amount of the clean water used measured by the clean water use meter 55 and the amount of the recycled water used measured by the recycled water use meter 56. For example, the fee calculator 58 may determine, as fee for usage of the independent water use system, the sum of the fee for usage of the clean water calculated based on the amount of clean water used and the fee for usage of the recycled water calculated based on the amount of recycled water used. The fee calculator 58 may discount at least one of the fee for usage of the clean water or the fee for usage of the recycled water according to the amount of the portion of the first drainage water and the second drainage water that has been purified by the purifier 30 into recycled water. Water meter(s) may be provided at the recycled water pipe 31a, the recycled water pipe 31b, the purifier 30, or the recycled water storage tank 32 to measure the amount of the recycled water.

The release water meter 57 (FIG. 3) includes, for example, a water meter provided at at least one of the clean water outflow pipe 13 or the recycled water outflow pipe 33. The release water meter 57 measures the amount of the release water allowed to be released out of the system via at least one of the clean water outflow pipe 13 or the recycled water outflow pipe 33. The fee calculator 58 calculates a fee for water release based on the amount of released water measured by the release water meter 57. The fee calculator 58 may calculate the fee for usage of the system based on the above-described amount of the clean water used, the amount of the recycled water used, and the amount of the released water. For example, the fee calculator 58 may determine the sum of the above-described fee for usage of the clean water, the fee for usage, and the fee for the released water as the fee for usage of the system.

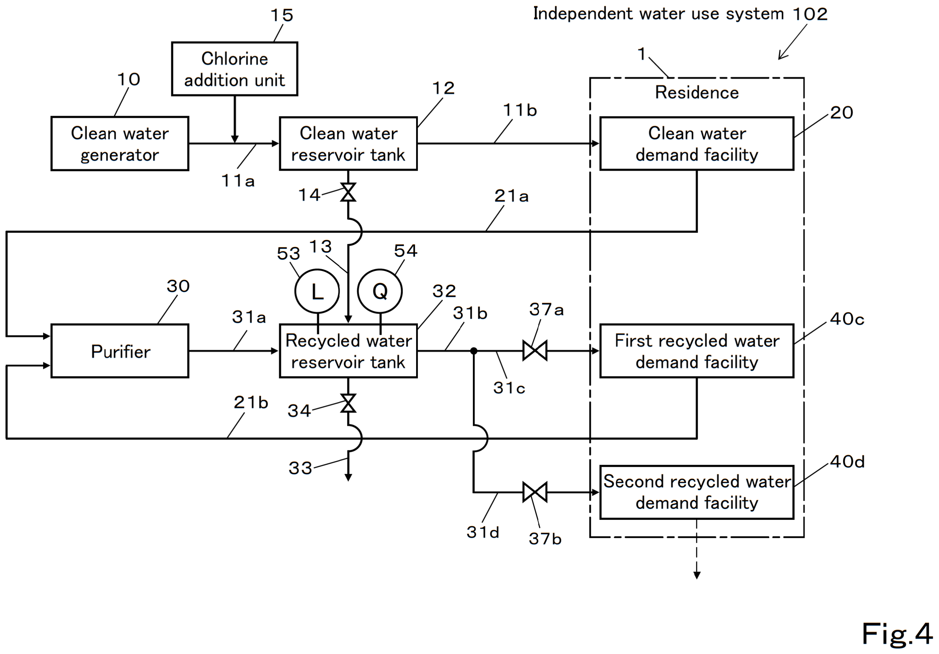

For example, like an independent water use system 102 according to a second example embodiment illustrated in FIG. 4, the following configuration may be used: the second recycled water pipe 31b branches at an intermediate portion thereof into segments which are connected to a respective plurality of recycled water demand facilities 40c and 40d, and recycled water flows through the segments of the second recycled water pipe 31b to be supplied to the respective recycled water demand facilities 40c and 40d.

In the independent water use system 102, the second recycled water pipe 31b is connected to the recycled water storage tank 32 and branches at an intermediate portion thereof into a third recycled water pipe 31c and a fourth recycled water pipe 31d. The third recycled water pipe 31c is connected to the first recycled water demand facility 40c and the fourth recycled water pipe 31d is connected to the second recycled water demand facility 40d. The first recycled water demand facility 40c and the purifier 30 are connected by the second drainage water pipe 21b. The second recycled water demand facility 40d is not connected to the purifier 30. Note that the water level gauges 51 and 53 and the water quality meters 52 and 54 shown in FIG. 1 may be included also in the independent water use system 102.

The first recycled water demand facility 40c is, for example, a washing machine or a toilet. The second recycled water demand facility 40d is, for example, a sprinkling system. The second drainage water from the first recycled water demand facility 40c flows through the second drainage water pipe 21b, is purified by the purifier 30, and is reused as recycled water in the first recycled water demand facility 40c or the second recycled water demand facility 40d. On the other hand, second drainage water (sprinkled water) from the second recycled water demand facility 40d is released out of the system (out of the independent water use system 102).

The third recycled water pipe 31c and the fourth recycled water pipe 31d may be provided with respective recycled water supply valves 37a and 37b as recycled water supply amount regulators. The recycled water supply valves 37a and 37b correspond to the first recycled water demand facility 40c and the second recycled water demand facility 40d, respectively. When the opening and closing of the plurality of the recycled water supply valves 37a and 37b are adjusted according to whether predetermined condition(s) is/are satisfied, recycled water obtained by purifying the second drainage water from the first recycled water demand facility 40c with the purifier 30 can be independently supplied to the first recycled water demand facility 40c or the second recycled water demand facility 40d at a desired flow rate.

For example, when the quality of the recycled water obtained by purifying the second drainage water is detected by the recycled water quality meter 54 and the quality of the recycled water is equal to or higher than a predetermined water quality, the recycled water supply valve 37a is opened and the recycled water supply valve 37b is closed to allow the recycled water to be supplied to the first recycled water demand facility 40c. When the quality of the above-described recycled water is lower than the predetermined water quality, the recycled water supply valve 37a is closed and the recycled water supply valve 37b is opened to allow the recycled water to be supplied to the second recycled water demand facility 40d. Such opening/closing of the recycled water supply valves 37a and 37b may be automatically controlled by the controller 50 or may be manually controlled by a worker.

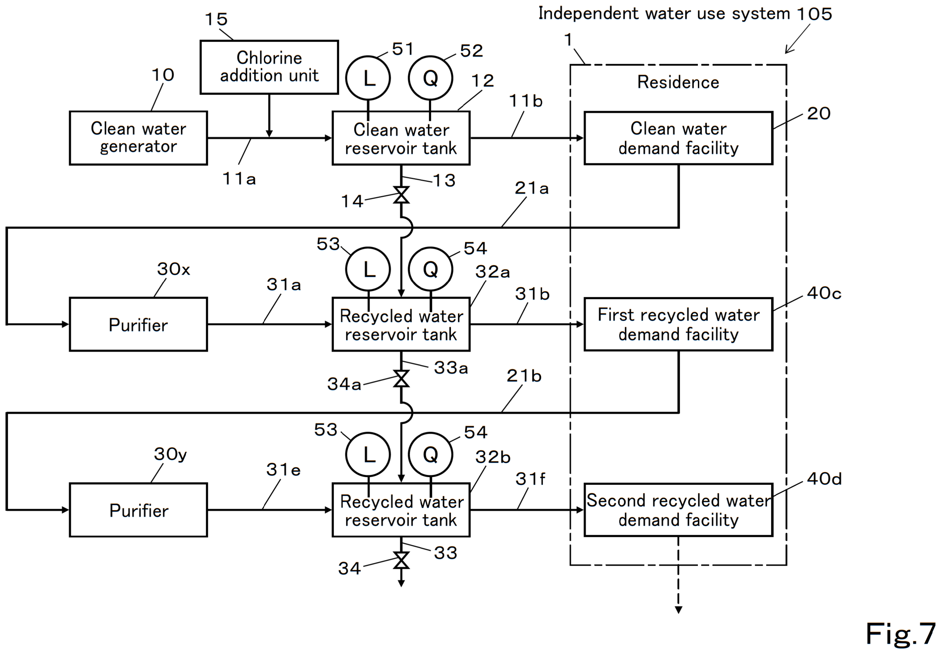

In FIG. 4, the first drainage water from the clean water demand facility 20 and the second drainage water from the first recycled water demand facility 40c are purified by the same purifier 30. Alternatively, a purifier to purify the first drainage water from the clean water demand facility 20 and a purifier to purify the second drainage water from the first recycled water demand facility 40c may be separately provided, as illustrated in a fifth example embodiment of FIG. 7 (described later). In FIG. 4, the recycled water obtained by purifying the first drainage water from the clean water demand facility 20 and the recycled water obtained by purifying the second drainage water from the first recycled water demand facility 40c are stored in the same recycled water storage tank 32. Alternatively, a recycled water storage tank to store the recycled water obtained by purifying the first drainage water from the clean water demand facility 20 and a recycled water storage tank to store the recycled water obtained by purifying the second drainage water from the first recycled water demand facility 40c may be separately provided.

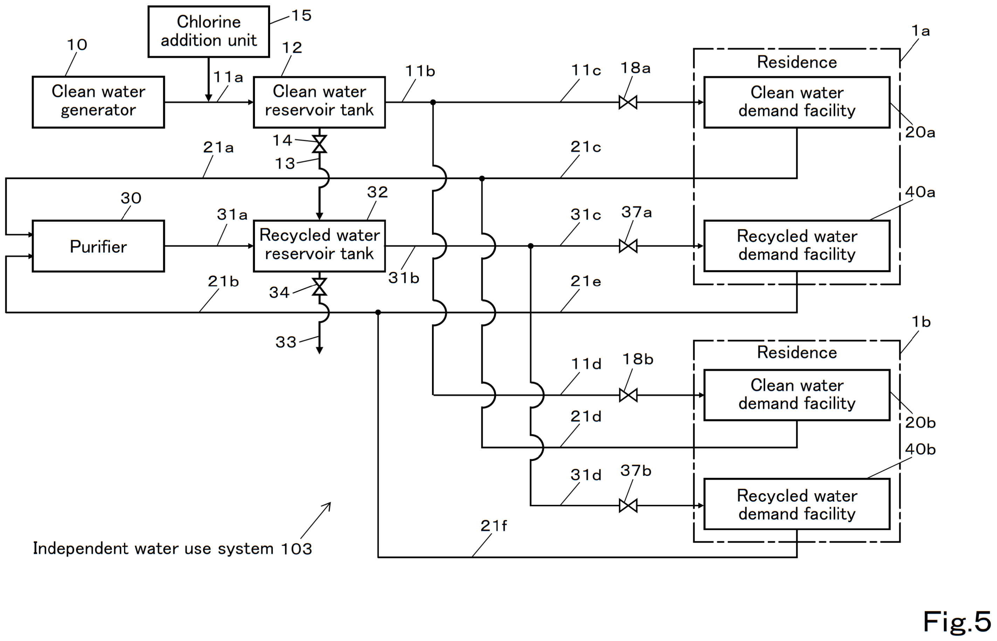

For example, like an independent water use system 103 according to a third example embodiment illustrated in FIG. 5, the second clean water pipe 11b may branch at an intermediate portion thereof into segments which are connected to a respective plurality of clean water demand facilities 20a and 20b provided at a respective plurality of residences 1a and 1b to supply the clean water to the plurality of clean water demand facilities 20a and 20b via the second clean water pipe 11b. The second recycled water pipe 31b may branch at an intermediate portion thereof into segments which are connected to a respective plurality of recycled water demand facilities 40a and 40b provided at the respective residences 1a and 1b to supply the recycled water to the plurality of recycled water demand facilities 40a and 40b via the second recycled water pipe 31b. The water level gauges 51 and 53 and the water quality meters 52 and 54 shown in FIG. 1 may be included also in the independent water use system 103.

In the independent water use system 103, the second clean water pipe 11b is connected to the clean water storage tank 12 and branches at an intermediate portion thereof into a third clean water pipe 11c and a fourth clean water pipe 11d. The third clean water pipe 11c is connected to the clean water demand facility 20a of the residence 1a, and the fourth clean water pipe 11d is connected to the clean water demand facility 20b of the residence 1b. With such a configuration, the clean water is supplied from the clean water storage tank 12 to the clean water demand facilities 20a and 20b provided at the respective residences 1a and 1b.

The first drainage water pipe 21a is connected to the purifier 30 and branches at an intermediate portion thereof into a first drainage water branch pipe 21c and a first drainage water branch pipe 21d. The first drainage water branch pipe 21c is connected to the clean water demand facility 20a of the residence 1a, and the first drainage water branch pipe 21d is connected to the clean water demand facility 20b of the residence 1b. With such a configuration, the first drainage water from the clean water demand facilities 20a and 20b provided at the residences 1a and 1b is sent to the purifier 30.

The second drainage water pipe 31b is connected to the recycled water storage tank 32 and branches at an intermediate portion thereof into a third recycled water pipe 31c and a fourth recycled water pipe 31d. The third recycled water pipe 31c is connected to the recycled water demand facility 40a of the residence 1a and the fourth recycled water pipe 31d is connected to the recycled water demand facility 40b of the residence 1b. With such a configuration, the recycled water is supplied from the recycled water storage tank 32 to the recycled water demand facilities 40a and 40b provided at the respective residences 1a and 1b.

The third clean water pipe 11c and the fourth clean water pipe 11d are provided with respective clean water supply valves 18a and 18b as clean water supply amount regulators. The clean water supply valves 18a and 18b correspond to the respective clean water demand facilities 20a and 20b. Adjusting the opening and closing of the clean water supply valves 18a and 18b allows clean water to be independently supplied to each of the clean water demand facilities 20a and 20b of the plurality of residences 1a and 1b at a desired flow rate.

Clean water supply pumps as clean water supply amount regulators may be provided such that the clean water supply pumps correspond to the respective clean water demand facilities 20a and 20b, in addition to or instead of the clean water supply valves 18a and 18b. That is, the clean water supply valves 18a and 18b, the clean water supply pumps, or a combination of the clean water supply valves 18a and 18b and the clean water supply pumps may be provided as clean water supply amount regulators at the third clean water pipe 11c and the fourth clean water pipe 11d. The opening and closing of the clean water supply valves 18a and 18b may be automatically controlled by the controller 50 or may be manually controlled by a worker.

The third recycled water pipe 31c and the fourth recycled water pipe 31d are provided with respective recycled water supply valves 37a and 37b as recycled water supply amount regulators. The recycled water supply valves 37a and 37b correspond to the respective recycled water demand facilities 40a and 40b. When the opening and closing of the recycled water supply valves 37a and 37b are adjusted, recycled water is independently supplied to each of the recycled water demand facilities 40a and 40b of the residences 1a and 1b at a desired flow rate.

Note that recycled water supply pumps as recycled water supply amount regulators may be provided such that the recycled water supply pumps correspond to the respective recycled water demand facilities 40a and 40b, in addition or instead of the recycled water supply valves 37a and 37b. That is, the recycled water supply valves 37a and 37b, the recycled water supply pumps, or a combination of the recycled water supply valves 37a and 37b and the recycled water supply pumps may be provided at the third recycled water pipe 31c and the fourth recycled water pipe 31d as recycled water amount supply regulators. The opening and closing of the recycled water supply valves 37a and 37b may be automatically controlled by the controller 50 or may be manually controlled by a worker.

The second drainage water pipe 21b is connected to the purifier 30 and branches at an intermediate portion thereof into a second drainage water branch pipe 21e and a second drainage water branch pipe 21f. The second drainage water branch pipe 21e is connected to the recycled water demand facility 40a of the residence 1a, and the second drainage water branch pipe 21f is connected to the recycled water demand facility 40b of the residence 1b. With such a configuration, the second drainage water from the recycled water demand facilities 40a and 40b at the respective residences 1a and 1b is supplied to the purifier 30.

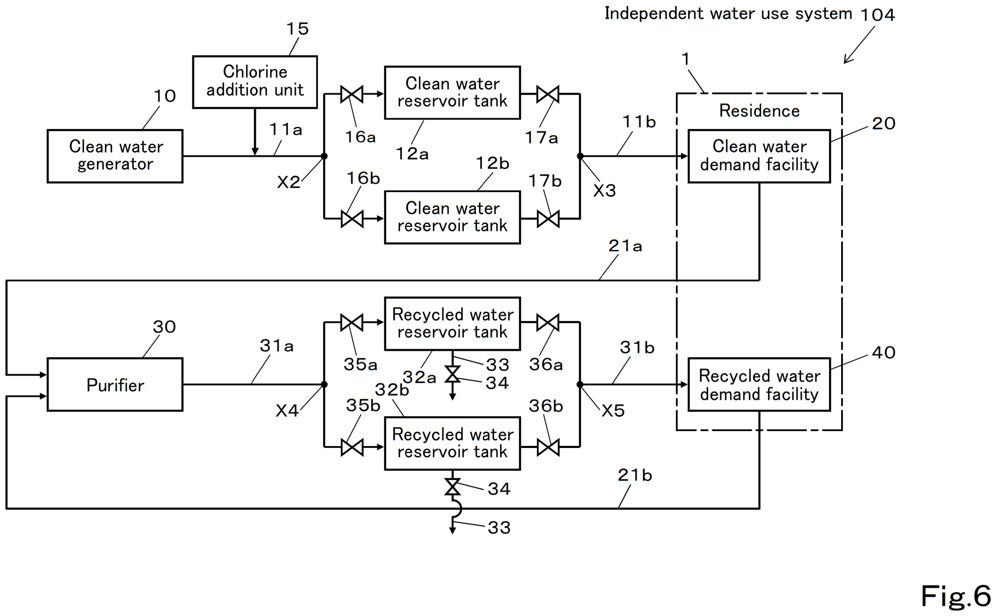

For example, like an independent water use system 104 according to a fourth example embodiment illustrated by FIG. 6, a plurality of clean water storage tanks 12a and 12b in parallel with each other may be provided between the clean water pipes 11a and 11b. A plurality of recycled water storage tanks 32a and 32b in parallel with each other may be provided between the recycled water pipes 31a and 31b. That is, the number of clean water storage tanks and/or the number of recycled water storage tanks included in the independent water use system may be two or more. Note that the independent water use system 104 may also include the water level gauges 51 and 53, the water quality meters 52 and 54, the outflow pipes 13 and the valves 14 as shown in FIGS. 1 and 4. The independent water use system 104 may include clean water outflow pipe(s) 13 and valve(s) 14 to allow clean water to flow out of at least one of the clean water storage tanks 12a and 12b to at least one of the recycled water storage tanks 32a and 32b. Alternatively, the independent water use system 104 may include clean water outflow pipes 13 and valves 14 to allow clean water to flow out of the clean water storage tanks 12a and 12b selectively to the respective recycled water storage tanks 32a and 32b.

In the independent water use system 104, the first clean water pipe 11a is connected to the clean water generator 10 and branches at an intermediate portion thereof into segments connected to the respective clean water storage tanks 12a and 12b. The clean water storage tanks 12a and 12b each store clean water that has been supplied thereto from the clean water generator 10 via the first clean water pipe 11a. The second clean water pipe 11b is connected to the clean water demand facility 20 and branches at an intermediate portion thereof into segments connected to the respective clean water storage tanks 12a and 12b. The clean water stored in each of the clean water storage tanks 12a and 12b is supplied to the clean water demand facility 20 via the second drainage water pipe 11b. Note that the clean water storage tanks 12a and 12b may have the same configuration or may have different configurations.

The segments of the first clean water pipe 11a that are downstream of a branching point X2 (segments close to the clean water storage tanks 12a and 12b) are provided with clean water input valves 16a and 16b as clean water input devices such that the clean water input valves 16a and 16b correspond to the respective clean water storage tanks 12a and 12. The segments of the second clean water pipe 11b that are upstream of a branching point X3 (segments close to the clean water storage tanks 12a and 12b) are provided with clean water output valves 17a and 17b as clean water output devices such that the clean water output valves 17a and 17b correspond to the respective clean water storage tanks 12a and 12b. Note that the clean water input valves 16a and 16b and the clean water output valves 17a and 17b may have the same configuration or may have different configurations.

When the opening and closing of each of the clean water input valves 16a and 16b are adjusted independently, the clean water is individually supplied from the clean water generator 10 to each of the plurality of clean water storage tanks 12a and 12b at a desired flow rate. When the opening and closing of each of the clean water output valves 17a and 17b are adjusted independently, the clean water is individually supplied from each of the clean water storage tanks 12a and 12b to the clean water demand facility 20 at a desired flow rate. The opening and closing of the clean water input valves 16a and 16b and the clean water output valves 17a and 17b may be automatically controlled by the controller 50 or may be manually controlled by a worker.

The clean water input valves 16a and 16b and the clean water output valves 17a and 17b make it possible to adjust the flow rate of the clean water to be introduced into and the flow rate of the clean water to be flowed out of each of the clean water storage tanks 12a and 12b independently. Thus, it is possible to appropriately select the clean water storage tank 12a, 12b to store clean water and the clean water storage tank 12a, 12b to allow clean water to flow out. For example, it is possible to keep one of the clean water storage tanks 12a and 12b operating and stop the operation of the other of the clean water storage tanks 12a and 12b to perform maintenance on the other of the clean water storage tanks 12a and 12b. Furthermore, for example, when something is wrong with one of the clean water storage tanks, it is still possible to stably supply the clean water from the other of the clean water storage tanks to the clean water demand facility 20. Furthermore, for example, it is possible to supply the clean water stored in one of the clean water storage tanks to the clean water demand facility 20 and use the other of the water storage tanks as a firefighting storage tank to use the clean water stored in the other of the water storage tanks as firefighting water.

Note that, for example, clean water input pump(s) or clean water output pump(s) may be provided at the clean water pipe(s) 11a, 11b depending on the slope of the clean water pipes 11a and 11b, instead of or in addition to the clean water input valves 16a and 16b and the clean water output valves 17a and 17b. In such a case, the driving of the clean water input pump and the clean water output pump may be automatically controlled by the controller 50 or may be manually controlled by a worker.

In the independent water use system 104, the first recycled water pipe 31a is connected to the purifier 30 and branches at an intermediate portion thereof into segments connected to the respective recycled water storage tanks 32a and 32b. The recycled water storage tanks 32a and 32b each store recycled water supplied thereto from the purifier 30 via the first recycled water pipe 31a. The second recycled water pipe 31b is connected to the recycled water demand facility 40 and branches at an intermediate portion thereof into segments connected to the respective recycled water storage tanks 32a and 32b. The recycled water stored in each of the recycled water storage tanks 32a and 32b is sent to the recycled water demand facility 40 via the second recycled water pipe 31b. Note that the recycled water storage tanks 32a and 32b may have the same configuration or may have different configurations.

The segments of the first recycled water pipe 31a that are downstream of a branching point X4 (segments close to the recycled water storage tanks 32a and 32b) are provided with recycled water input valves 35a and 35b as recycled water input devices such that the recycled water input valves 35a and 35b correspond to the respective recycled water storage tanks 32a and 32b. The segments of the second recycled water pipe 31b that are upstream of a branching point X5 (segments close to the recycled water storage tanks 32a and 32b) are provided with recycled water output valves 36a and 36b as recycled water output devices such that the recycled water output valves 36a and 36b correspond to the respective recycled water storage tanks 32a and 32b. Note that the recycled water input valves 35a and 35b and the recycled water output valves 35a and 35b may have the same configuration or may have different configurations.

When the opening and closing of each of the recycled water input valves 35a and 35b are adjusted independently, the recycled water is supplied from the purifier 30 to each of the recycled water storage tanks 32a and 32b at a desired flow rate. When the opening and closing of each of the recycled water output valves 36a and 36b are adjusted independently, the recycled water is supplied from the each of recycled water storage tanks 32a and 32b to the recycled water demand facility 40 at a desired flow rate. The opening and closing of the recycled water input valves 35a and 35b and the recycled water output valves 36a and 36b may be automatically controlled by the controller 50 or may be manually controlled by a worker.

The recycled water input valves 35a and 35b and the recycled water output valves 36a and 36b make it possible to adjust the flow rate of the recycled water to be introduced into and the flow rate of the recycled water to be flowed out of each of the recycled water storage tanks 32a and 32b independently. Thus, it is possible to appropriately select the recycled water storage tank 32a, 32b to store the recycled water and the recycled water storage tank 32a, 32b to allow the recycled water to flow out. For example, it is possible to keep one of the recycled water storage tanks 32a and 32b operating and stop the operation of the other of the recycled water storage tanks 32a and 32b to perform maintenance on the other of the recycled water storage tanks 32a and 32b. Furthermore, for example, when something is wrong with one of the recycled water storage tanks, it is still possible to stably supply recycled water from the other of the recycled water storage tanks to the recycled water demand facility 40. Furthermore, for example, it is possible to supply the recycled water stored in one of the recycled water storage tanks to the recycled water demand facility 40 and use the other of the recycled water storage tanks as a firefighting storage tank to use the recycled water stored in the other of the recycled water storage tanks as firefighting water.

Note that, for example, clean water input pump(s) or clean water output pump(s) may be provided at the recycled water pipe(s) 31a, 31b depending on the slope of the recycled water pipes 31a and 31b, instead of or in addition to the recycled water input valves 35a and 35b and the recycled water output valves 36a and 36b. In such a case, the driving of the recycled water input pump and the recycled water output pump may be automatically controlled by the controller 50 or may be manually controlled by a worker.

In FIG. 6, two clean water storage tanks 12a and 12b and two recycled water storage tanks 32a and 32b are provided, but three or more clean water storage tanks 12a and 12b and three or more recycled water storage tanks 32a and 32b may be provided, and the number of the clean water storage tanks and the number of the recycled water storage tanks may be different. The clean water storage tanks 12a and 12b do not need to be installed at the same location and may be installed at locations away from each other. The plurality of recycled water storage tanks 32 do not need to be installed at the same location and may be installed at locations away from each other.

For example, the clean water storage tanks 12a and 12b may be connected to each other by pipe(s) other than the clean water pipes 11a and 11b such that the clean water flows between the clean water storage tanks 12a and 12b via the pipe(s). Similarly, the plurality of recycled water storage tanks 32a and 32b may be connected to each other by pipe(s) other than the recycled water pipes 31a and 31b such that the recycled water flows between the plurality of recycled water storage tanks 32a and 32b via the pipe(s).

For example, like an independent water use system 105 according to a fifth example embodiment illustrated by FIG. 7, the following configuration may be used: first drainage water from the clean water demand facility 20 is purified by a purifier 30x into recycled water, the recycled water is then supplied to a first recycled water demand facility 40c via the recycled water pipes 31a and 31b and the recycled water storage tank 32a, second drainage water from the first recycled water demand facility 40c is purified by a purifier 30y into recycled water, and then the recycled water is supplied to a second recycled water demand facility 40d via recycled water pipes 31e and 31f and the recycled water storage tank 32b. Note that, in the independent water use system 105, the purifiers 30x and 30y are provided to separately purify the first drainage water from the clean water demand facility 20 and the second drainage water from the first recycled water demand facility 40c, but the purifier 30x and the purifier 30y may have the same configuration or may have different configurations.

In a case where a plurality of recycled water storage tanks 32a and 32b are provided as shown in FIG. 7, a recycled water outflow pipe 33a and a recycled water outflow valve 34a may be provided to allow the recycled water to flow out of the recycled storage tank 32a (one of the recycled storage tanks) to the recycled water storage tank 32b (the other of the recycled storage tanks).

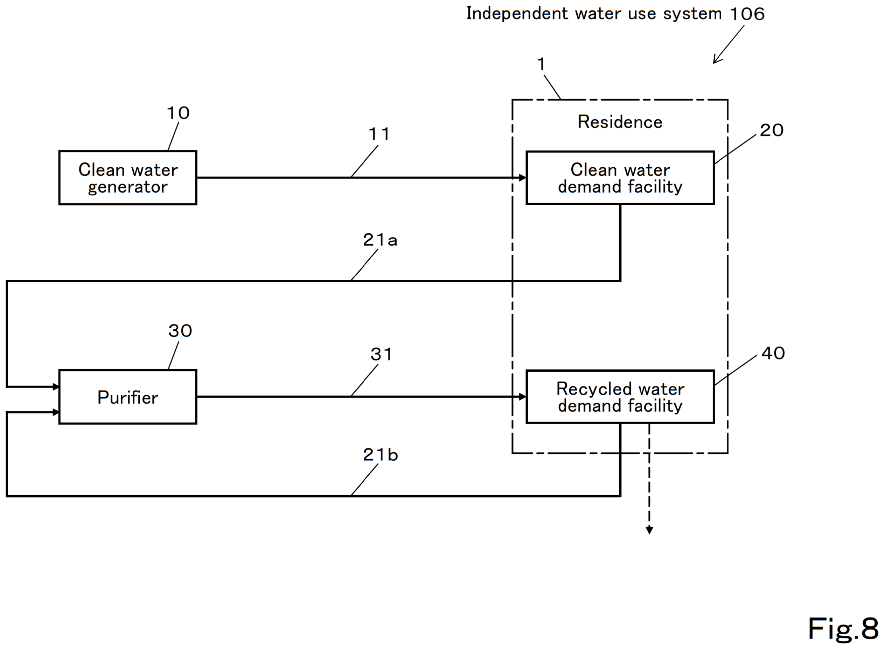

For example, the clean water storage tank 12 and the recycled water storage tank 32 may be omitted, and, like an independent water use system 106 according to a sixth example embodiment illustrated in FIG. 8, clean water supplied by the clean water generator 10 may be supplied to the clean water demand facility 20 via a clean water pipe 11, and recycled water obtained by purification by the purifier 30 may be supplied to the recycled water demand facility 40 via a recycled water pipe 31. In such a case, reservoirs such as tanks to respectively store the clean water and the recycled water may be integrally provided in the clean water generator 10, the clean water demand facility 20, and/or the recycled water demand facility 40.

In a case where the recycled water demand facility 40 consists only of a specific facility such as a sprinkling facility not restricted from returning the used water directly to nature, the second drainage water pipe 21b shown in FIG. 1 and the like may be omitted. In such a case, the water generated by the clean water generator 10 is used in the clean water demand facility 20, then purified by the purifier 30 into recycled water, the recycled water is used in the recycled water demand facility 40, and the used water, i.e., second drainage water, is released out of the system. Therefore, the water does not circulate through the purifier 30, the recycled water storage tank 32 and the recycled water demand facility 40.

The above description of example embodiments discusses examples in which recycled water is released out of the system from the recycled water storage tank(s) 32, 32a, 32b via the recycled water outflow pipe(s) 33, 33a, but this does not imply any limitation. For example, release pipe(s) may be connected to the purifier(s) 30, 30x, 30y, and the recycled water obtained by purification by the purifier(s) 30 may be released out of the system via the release pipe(s). In such a case, the release pipe may include a valve and be connected to a water quality meter, and the controller 50 or a worker may allow the recycled water obtained by purification by the purifier 30 to be released out of the system through the release pipe according to whether predetermined condition(s) is/are satisfied or not. The predetermined condition(s) may include at least one of (i) the quality of the recycled water obtained by purification by the purifier(s) 30 is lower than the predetermined water quality or (ii) the water level of the recycled water storage tank(s) 32, 32a 32b is lower than a predetermined water level.

In the above-described example embodiments, the clean water generator 10 generates clean water from air, but this does not imply any limitation. The clean water generator 10 may be configured to generate clean water from rain water, river water or the like. The independent water use system 101 to 106 may include a plurality of the clean water generators 10. A photovoltaic power generation system may be linked to the independent water use system 101 to 106 to ensure electric power for the clean water generator 10 to operate.

In the above-described example embodiments, increases and decreases in clean water in the clean water storage tank 12 and recycled water in the recycled water storage tank 32 are adjusted based on the water level and the quality of the clean water and the water level and the quality of the recycled water measured by the water level gauges 51 and 53 and the water quality meters 52 and 54. Note, however, that additionally or alternatively, for example, the controller 50 (FIG. 3) may be configured or programmed to transmit, via the communicator 60, the water level and the quality of the clean water in the clean water storage tank 12 and the water level and the quality of the recycled water in the recycled water storage tank 32 measured by the water level gauges 51 and 53 and the water quality meters 52 and 54 to a monitoring device (monitor) 70 to be used by a worker or a user of the independent water use system 101 to 106. The water level and the quality of the clean water in the clean water storage tank 12 and the recycled water in the recycled water storage tank 32 may then be displayed by a display included in the monitoring device 70.

Similarly, the controller 50 may be configured or programmed to transmit the amounts of the clean water, the recycled water and the release water measured by the meters 55 to 57, the operation state of devices of the independent water use system 101 to 106, and/or the like to the monitoring device 70 via the communicator 60 and cause the monitoring device 70 to display the amounts of the clean water, the recycled water and the release water measured by the meters 55 to 57, the operation state of devices of the independent water use system 101 to 106, and/or the like. Note that, for example, the monitoring device 70 includes a computer, a smartphone or the like, and the communicator 60 is configured to communicate with the monitoring device 70 via a wide area communication network such as the Internet or a short range communication network such as Wi-Fi (registered trademark).

The elements of the independent water use systems 101 to 106 of the above-described example embodiments may be used in any combination. In the above-described example embodiments, the independent water use system 101 to 106 is applied to use water for one or more water demand facilities provided at the residence(s) 1, 1a, 1b as specific water demand facilities, but this does not imply any limitation. The independent water use system 101 to 106 may be applied to use water for one or more water demand facilities provided at location(s) such as detached house(s), housing complex(s) such as apartment(s), commerce facility(ties), public facility(facilities), and/or factory(factories). The number of devices, the number of pipes and the number of tanks are not limited to the numbers as indicated in FIGS. 1 to 8, and may be selected as appropriate. The number of water demand institutions such as residences or the like using the independent water use system 101 to 106 may be one or two or more. The number of water consumers (subscribers, customers) may also be one or two or more. Furthermore, the number of clean water demand facilities and the number of recycled water facilities may each be one or two or more.

The example embodiments described so far include features in the following items and achieve effects in the following items.

(Item 1) An independent water use system 101 to 106 is an independent water use system for water use for one or more specific water demand facilities 20, 20a, 20b, 40, 40a to 40d, and includes a clean water generator 10, a clean water pipe 11a to 11d, 11 to allow clean water generated by the clean water generator 10 to flow to a clean water demand facility 20, 20a, 20b, a first drainage water pipe 21a, 21c, 21d to allow first drainage water, resulting from usage of the clean water in the clean water demand facility 20, 20a, 20b, to flow therethrough, a purifier 30, 30x, 30y connected to the first drainage water pipe 21a, 21c, 21d to purify the first drainage water, and a recycled water pipe 31a to 31f, 31 to allow recycled water obtained by purification of the first drainage water by the purifier 30, 30x, 30y to flow to a recycled water demand facility 40, 40a to 40d.

With the configuration of item 1, even in areas with no waterworks systems, etc., it is possible to generate clean water from air or the like using the clean water generator 10, use the clean water in one or more clean water demand facilities 20, 20a and/or 20b, purify first drainage water, resulting from the usage of the clean water in the one or more clean water facilities 20, 20a and/or 20b, to generate recycled water using the purifier(s) 30, 30x and 30y, and reuse the recycled water in one or more recycled water demand facilities 40, and/or 40a to 40d, making it possible to improve the convenience of the independent water use system 101 to 106 using water in an amount that is greater than the amount of the generated clean water.

(Item 2) The independent water use system 101 to 106 according to item 1 further includes a second drainage water pipe 21b, 21e, 21f to allow second drainage water, resulting from usage of the recycled water in the recycled water demand facility 40, 40c, to flow to the purifier 30, 30y. With this, it is possible to purify the second drainage water from one or more recycled water demand facilities 40 and/or 40a to 40c using the purifier 30, 30y and reuse recycled water obtained by the purification in the one or more recycled water demand facilities 40 and/or 40a to 40c, i.e., it is possible to cyclically use the recycled water. This makes it possible to further improve the convenience of the independent water use system 101 to 106 using water in an amount that is greater than the amount of the generated clean water.

(Item 3) The independent water use system 101 to 105 according to item 1 or 2 further includes a release pipe 13, 33, 33a (clean water outflow pipe 13, recycled water outflow pipe 33, 33a) to allow at least one of the clean water or the recycled water to be released from the independent water use system. With this, for example, it is possible to use the clean water or the recycled water other than for supplying water to one or more water demand facilities 20, 20a, 20b, 40 and/or 40a to 40d, and possible to adjust the amount and the quality of the clean water or the recycled water.

(Item 3A) The independent water use system 102, 103 according to any one of items 1 to 3 further includes recycled water supply amount regulators such as recycled water supply valves 37a to 37d at recycled water pipes 31c, 31d such that the water supply amount regulators correspond to a respective plurality of the recycled water demand facilities 40a to 40d. Thus, for example, it is possible to supply the recycled water selectively to any of a plurality of recycled water demand facilities 40a to 40d by opening or closing the recycled water supply valves 37a to 37d based on predetermined condition(s) relating to, for example, the amount or the quality of the recycled water obtained by purifying the second drainage water from the first recycled water demand facility 40c using the purifier 30 and based on the type and/or the like of the plurality of recycled water demand facilities 40a to 40d.

(Item 4) The independent water use system 101 to 105 according to any one of items 1 to 3A, further includes a clean water storage tank 12, 12a, 12b connected to the clean water pipe 11a to 11d to store the clean water. With this, it is possible to temporarily store the clean water generated by the clean water generator 10 in the clean water storage tank(s) 12, 12a and/or 12b, and use the clean water stored in the clean water storage tank(s) 12, 12a and/or 12b according to demand of one or more clean water demand facilities 20, 20a and/or 20b.

(Item 5) The independent water use system 101 to 103, 105 according to any one of claims 1 to 3A or the like further includes a clean water outflow pipe 13 to allow the clean water stored in the clean water storage tank 12 to outflow to somewhere other than the clean water demand facility 20, and a clean water outflow device (clean water outflow valve) 14 to adjust an outflow rate of the clean water through the clean water outflow pipe 13. With this, it is possible to use the clean water stored in the clean water storage tank 12 other than for supplying water to one or more clean water demand facilities 20.

(Item 6) The independent water use system 101 to 105 according to item 5, further includes a recycled water storage tank 32, 32a connected to the recycled water pipe 31a, 31b, 31e, 31f to store the recycled water, and the clean water outflow pipe 13 is configured to allow the clean water stored in the clean water storage tank 12 to outflow to the recycled water storage tank 32, 32a. With this, when an increased amount of the recycled water in the recycled water storage tank(s) 32, 32a is demanded, the clean water flowed out through the clean water outflow pipe 13 can be used to compensate for the insufficiency of the recycled water. Since the clean water is cleaner than the recycled water, it is possible to, when the state of the recycled water such as the water level or the quality of the recycled water in the recycled water storage tank(s) 32, 32a has deteriorated, improve the state of the recycled water using the clean water flown out through the clean water outflow pipe 13.

(Item 7) The independent water use system 101, 105 according to item 5 or 6 or the like further includes a clean water state detector 51, 52 (water level gauge 51, water quality meter 52) to detect a state including at least one of a quality or a water level of the clean water stored in the clean water storage tank 12, and the clean water outflow device (clean water outflow valve) 14 is configured to adjust the outflow rate of the clean water based on the state of the clean water detected by the clean water state detector 51, 52. With this, it is possible to appropriately adjust the outflow rate of the clean water from the clean water storage tank 12 using the clean water outflow device 14 based on the state of the clean water detected by the clean water state detector(s) 51, 52.

(Item 8) The independent water use system 101 to 105 according to any one of items 4 to 6 further includes a clean water state detector 51, 52 to detect a state of the clean water stored in the clean water storage tank 12, and the clean water generator 10 is configured to adjust an amount of the clean water generated thereby based on the state of the clean water detected by the clean water state detector 51, 52. With this, it is possible to appropriately adjust the amount of the clean water generated by the clean water generator 10 based on the state of the clean water detected by the clean water state detector(s) 51, 52.

(Item 9) In the independent water use system 101 to 105 according to item 7 or 8, the clean water state detector 51, 52 includes at least one of (i) a clean water level gauge 51 to detect the water level of the clean water stored in the clean water storage tank 12 or (ii) a clean water quality meter 52 to detect the quality of the clean water stored in the clean water storage tank 12. With this, it is possible to determine that the amount of the clean water generated by the clean water generator 10 should be increased when the water level of the clean water in the clean water storage tank 12 is lower than a predetermined water level. It is also possible to determine that the discharge of the clean water should be promoted when the water level of the clean water in the clean water storage tank 12 is higher than a predetermined water level. Furthermore, it is possible to determine that the amount of water generated by the clean water generator 10 should be increased and/or determine that recycled water should be supplied to somewhere other than the one or more clean water demand facilities 20 when the quality of the clean water stored in the clean water storage tank 12 is lower than a predetermined water quality suitable for use as clean water.

(Item 10) The independent water use system 104 according to any one of items 1 to 3 further includes a plurality of clean water storage tanks 12a, 12b connected to the clean water pipe 11a, 11b to store the clean water, and a plurality of clean water inlet devices (clean water inlet valves) 16a, 16b corresponding to the respective plurality of clean water storage tanks 12a, 12b and a plurality of clean water outlet devices (clean water outlet valves) 17a, 17b corresponding to the respective plurality of clean water storage tanks 12a, 12b, the plurality of clean water inlet devices 16a, 16b are each configured to adjust a flow rate of the clean water to flow into a corresponding one of the plurality of clean water storage tanks 12a, 12b, and the plurality of clean water outlet devices 17a, 17b are each configured to adjust a flow rate of the clean water to flow out of a corresponding one of the plurality of clean water storage tanks 12a, 12b. With this, since it is possible to adjust the flow rate of the clean water introduced into and the flow rate of the clean water outflowing from each of the plurality of clean water storage tanks 12a and 12b independently, it is possible to appropriately select the clean water storage tank to store the clean water and the clean water storage tank to allow the clean water to outflow. For example, it is possible to keep one of the plurality of clean water storage tanks 12a and 12b operating and stop the operation of the other of the plurality of clean water storage tanks 12a and 12b to perform maintenance on the other of the plurality of clean water storage tanks 12a and 12b while supplying clean water to one or more clean water demand facilities 20.

(Item 11) The independent water use system 101 to 105 according to any one of items 1 to 10 further includes a chlorine addition unit 15 to add chlorine to the clean water. With this, it is possible to disinfect the clean water by adding chlorine from the chlorine addition unit 15 to the clean water.

(Item 12) In the independent water use system 101 to 106 according to any one of items 1 to 11, the clean water demand facility 20, 20a, 20b is provided at a residence 1, 1a, 1b, and the clean water is at least used as drinking water. With this, it is possible to ensure availability of clean water even at the residence(s) 1, 1a, 1b in an area with no waterworks systems.

(Item 13) In the independent water use system 103 according to item 12, the clean water pipe 11a to 11d is configured to allow the clean water to flow to each of a plurality of the clean water demand facilities 20a, 20b, and the independent water use system 103 further includes clean water supply amount regulators (clean water supply valves) 18a, 18b to adjust flow rates of the clean water to be supplied to the respective plurality of clean water demand facilities 20a, 20b independently of each other. With this, it is possible to supply clean water to the plurality of clean water demand facilities 20a and 20b independently of each other via the clean water supply amount regulators 18a and 18b at desired flow rates.

(Item 14) The independent water use system 101 to 105 according to any one of items 1 to 13 further includes a recycled water storage tank 32, 32a, 32b connected to the recycled water pipe 31a, 31b to store the recycled water. With this, it is possible to temporarily store the recycled water obtained by purification by the purifier 30 in the recycled water storage tank(s) 32, 32a, 32b and use the recycled water stored according to demands of one or more recycled water demand facilities 40 and/or 40a to 40d.

(Item 15) The independent water use system 101 to 105 according to item 14 further includes a recycled water outflow pipe 33, 33a to allow the recycled water stored in the recycled water storage tank 32, 32a to outflow to somewhere other than the recycled water demand facility 40, 40c, and a recycled water outflow device (recycled water outflow valve) 34, 34a to adjust an outflow rate of the recycled water through the recycled water outflow pipe 33, 33a. With this, it is possible to use the recycled water stored in the recycled water storage tank(s) 32, 32a other than for supplying water to one or more recycled water demand facilities 40.

(Item 16) The independent water use system 101, 105 according to item 15 or the like further includes a recycled water state detector 53, 54 (recycled water level gauge 53, recycled water quality meter 54) to detect a state including at least one of a quality or a water level of the recycled water stored in the recycled water storage tank 32, 32a, 32b, and the recycled water outflow device (recycled water outflow valve) 34, 34a is configured to adjust an outflow rate of the recycled water based on the state of the recycled water detected by the recycled water state detector 53, 54. With this, it is possible to appropriately adjust the outflow rate of the recycled water from the recycled water storage tank(s) 32, 32a, 32b based on the state of the recycled water detected by the recycled water state detector(s) 53, 54.

(Item 17) The independent water use system 101 to 105 according to item 14 or 15 further includes a recycled water state detector 53, 54 to detect a state of the recycled water stored in the recycled water storage tank 32, 32a, 32b, and the purifier 30, 30x, 30y is configured to adjust an amount of the recycled water purified thereby based on the state of the recycled water detected by the recycled water state detector 53, 54. With this, it is possible to appropriately adjust the amount of the recycled water purified by the purifier(s) 30, 30x, 30y based on the state of the recycled water detected by the recycled water state detector(s) 53, 54.

(Item 18) In the independent water use system 101 to 105 according to item 16 or 17, the recycled water state detector 53, 54 includes at least one of (i) a recycled water level gauge 53 to detect the water level of the recycled water stored in the recycled water storage tank 32, 32a, 32b or (ii) a recycled water quality meter 54 to detect the quality of the recycled water stored in the recycled water storage tank 32, 32a, 32b. With, it is possible to determine, for example, that the amount of water purified by the purifier 30 should be increased when the water level of the recycled water in the recycled water storage tank(s) 32, 32a, 32b is lower than a predetermined water level. It is also possible to determine that the discharge of recycled water from the recycled water storage tank 32 should be promoted when the water level of the recycled water in the recycled water storage tank 32, 32a, 32b is less than a predetermined water level. It is also possible to determine that the amount of the recycled water purified by the purifier(s) 30, 30x, 30y should be increased and/or determine that the recycled water should be supplied to somewhere other than one or more recycled demand facilities 40 and/or 40a to 40c when the quality of the recycled water stored in the recycled water storage tank(s) 32, 32a, 32b is lower than a predetermined water quality suitable for use as recycled water.

(Item 19) The independent water use system 104 according to any one of items 1 to 18 further includes a plurality of recycled water storage tanks 32a, 32b connected to the recycled water pipe 31a, 31b to store the recycled water, a plurality of recycled water inlet devices (recycled water inlet valves) 35a, 35b corresponding to the respective plurality of recycled water storage tanks 32a, 32b and a plurality of recycled water outlet devices (recycled water outlet valves) 36a, 36b corresponding to the respective plurality of recycled water storage tanks, the plurality of recycled water inlet devices 35a, 35b are each configured to adjust a flow rate of the recycled water to flow into a corresponding one of the plurality of recycled water storage tanks 32a, 32b, and the plurality of recycled water outlet devices 36a, 36b are each configured to adjust a flow rate of the recycled water to flow out of a corresponding one of the plurality of recycled water storage tanks 32a, 32b. With this, since it is possible to adjust the flow rate of the recycled water introduced into and the flow rate of the recycled water flowing out of each of the plurality of recycled water storage tanks 32a and 32b independently, it is possible to appropriately select the recycled water storage tank to store the recycled water and the recycled water storage tank to allow the recycled water to flow out thereof. For example, it is possible to keep one of the plurality of recycled water storage tanks 32a and 32b operating and stop the operation of the other of the plurality of recycled water storage tanks 32a and 32b to perform maintenance on the other of the plurality of recycled water storage tanks 32a and 32b while continuing to supply the recycled water to one or more recycled water demand facilities 40.

(Item 20) In the independent water use system 101 to 105 according to any one of items 1 to 19, the purifier 30, 30x, 30y includes a recycled water disinfecting tank 30g to disinfect the recycled water. With this, it is possible to supply the recycled water generated by the purifier(s) 30, 30x, 30y to one or more recycled water demand facilities 40 and/or 40a to 40d after appropriately disinfecting the recycled water in the recycled water disinfecting tank 30g.

(Item 21) In the independent water use system 101 to 105 according to any one of items 1 to 20, the purifier 30, 30x, 30y includes an eliminator (reverse osmosis membrane) 30f to eliminate impurities contained in the recycled water. With this, it is possible to supply the recycled water to one or more recycled water demand facilities 40 and/to 40a to 40d after appropriately eliminating impurities in the recycled water generated by the purifier(s) 30, 30x, by the eliminator 30f.

(Item 22) In the independent water use system 101 to 106 according to any one of items 1 to 21, the recycled water demand facility 40, 40a to 40d is provided at a residence 1, 1a, 1b, and the recycled water is used as at least one of washing water, toilet flushing or sprinkling water. With this, it is possible to ensure availability of at least one of the washing water, the toilet flushing or the sprinkling water even at the residence(s) 1, 1a, 1b in an area with no waterworks system.

(Item 23) In the independent water use system 102, 103 according to any one of items 1 to 22, the recycled water pipe 31b to 31d is configured to allow the recycled water to flow to each of a plurality of the recycled water demand facilities 40a to 40d, and the independent water use system further includes recycled water supply amount regulators (recycled water supply valves) 37a, 37b to adjust flow rates of the recycled water to be supplied to the respective plurality of recycled water demand facilities 40a to 40d independently of each other. With this, it is possible to supply the recycled water at desired flow rates to the plurality of recycled water demand facilities 40a to 40d independently of each other.

(Item 24) The independent water use system 101 to 106 according to any one of items 1 to 23, which is configured such that heat generated when the clean water generator 10 generates the clean water is used to heat the clean water, the recycled water, or the purifier 30, 30x, 30y. With this, it is possible to use the heat generated by the clean water generator 10 to heat the clean water, the recycled water, or the purifier(s) 30, 30x, 30y, prevent the clean water or the recycled water from freezing in cold climate areas for example, and improve the purification function of the purifier(s) 30, 30x, 30y.

(Item 25) The independent water use system 101 to 106 according to any one of items 1 to 24 is configured such that at least one of the clean water or the recycled water is used as firefighting water. With this, even if, for example, the independent water use system 101 to 106 is introduced at a remote area remote from fire stations, it is possible to make effective use of the clean water or the recycled water as fighting water to perform firefighting in the remote area.

(Item 26) The independent water use system 101 to 106 according to any one of items 1 to 25 further includes a clean water use meter 55 to measure an amount of the clean water used in the clean water demand facility 20, 20a, 20b, and a fee calculator 58 to calculate a fee for usage of the clean water based on the amount of the clean water used. With this, it is possible to automatically calculate, with the fee calculator 58, a fee for usage according to the amount of the clean water generated by the clean water generator 10 used in one or more clean water demand facilities 20, 20a, 20b.

(Item 27) The independent water use system 101 to 106 according to any one of items 1 to 26 further includes a recycled water use meter 56 to measure an amount of the recycled water used in the recycled water demand facility 40, 40a to 40d, and a fee calculator 58 to calculate a fee for usage of the recycled water based on the amount of the recycled water used. With this, it is possible to automatically calculate, with the fee calculator 58, a fee for usage according to the amount of the recycled water generated by the purifier(s) 30, 30x, 30y used in one or more recycled water demand facilities 40, 40a, 40b.

(Item 28) The independent water use system 101 to 106 according to any one of items 1 to 25 further includes a clean water use meter 55 to measure an amount of the clean water used in the clean water demand facility 20, 20a, 20b, a recycled water use meter 56 to measure an amount of the recycled water used in the recycled water demand facility 40, 40a to 40d, and a fee calculator 58 to calculate a fee for usage of the independent water use system based on the amount of the clean water used and the amount of the recycled water used. With this, it is possible to automatically calculate a fee for usage of the whole independent water use system 101 to 106. It is also possible to discount at least one of the fee for usage of the clean water or the fee for usage of the recycled water according to the amount of a portion of the first drainage water and the second drainage water that has been turned into recycled water via purification by the purifier 30.

(Item 29) The independent water use system 101 to 106 according to any one of items 1 to 28 further includes a release water meter 57 to measure an amount of a portion of the clean water and the recycled water that is released from the independent water use system, and a fee calculator 58 to calculate a fee for release based on the amount of the portion of the clean water and the recycled water that is released. With this, it is possible to automatically calculate, with the fee calculator 58, a fee for usage according to the amount of water released out of the independent water use system 101 to 106 through the release pipe(s) 13, 33, 33a.

(Item 30) The independent water use system 101 to 106 according to any one of items 1 to 25 further includes a clean water use meter 55 to measure an amount of the clean water used in the clean water demand facility 20, 20a, 20b, a recycled water use meter 56 to measure an amount of the recycled water used in the recycled water demand facility 40, 40a to 40d, a release water meter 57 to measure an amount of a portion of the clean water and the recycled water that is released from the independent water use system, and a fee calculator 58 to calculate a fee for usage of the independent water use system based on the amount of the clean water used, the amount of the recycled water used, and the amount of the portion of the clean water and the recycled water that is released. With this, it is possible to automatically calculate a fee for usage of the whole independent water use system 101 to 106. It is also possible to discount at least one of the fee for usage of the clean water or the fee for usage of the recycled water according to the amount of a portion of the first drainage water and the second drainage water that has been turned into recycled water via purification by the purifier 30. It is also possible to configure the system such that a fee for usage according to the amount of release water released out of the independent water use system is not calculated by the fee calculator 58 and not included in the fee for usage of the system, making it possible to reduce the financial burden on users.

While preferred embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

1, 1a, 1b Residence
10 Clean water generator
11 Clean water pipe
11a First clean water pipe
11b Second clean water pipe
11c Third clean water pipe
11d Fourth clean water pipe
12, 12a, 12b Clean water storage tank
13 Clean water outflow pipe (release pipe)
14 Clean water outflow valve (clean water outflow device)
15 Chlorine addition unit
16a, 16b Clean water inlet valve (clean water inlet device)
17a, 17b Clean water outlet valve (clean water outlet device)
18a, 18b Clean water supply valve (clean water supply amount regulator)
20, 20a, 20b Clean water demand facility
21a First drainage water pipe
21b Second drainage water pipe
21c First drainage water branch pipe
21d First drainage water branch pipe
21e Second drainage water branch pipe
21f Second drainage water branch pipe
30, 30x, 30y Purifier
30f Eliminator (reverse osmosis membrane)
30g Recycled water disinfecting tank
31, 31e, 31f Recycled water pipe
31a First recycled water pipe
31b Second recycled water pipe
31c Third recycled water pipe
31d Fourth recycled water pipe
32, 32a, 32b Recycled water storage tanks
33, 33a Recycled water outflow pipe (release pipe)
34, 34a Recycled water outflow valve (recycled water outflow device)
35a, 35b Recycled water inlet valve (recycled water inlet device)
36a, 36b Recycled water outlet valve (recycled water outlet device)
37a, 37b Recycled water supply valve (recycled water supply amount regulator)
40, 40a, 40b Recycled water demand facility
40c First recycled water demand facility
40d Second recycled water demand facility
50 Controller
51 Clean water level gauge (clean water state detector)
52 Clean water quality meter (clean water state detector)
53 Recycled water level gauge (recycled water state detector)
54 Recycled water quality meter (recycled water state detector)
55 Clean water use meter
56 Recycled water use meter
57 Release water meter
58 Fee calculator
101 to106 Independent water use system

## Claims

1. An independent water use system for water use for one or more specific water demand facilities, the independent water use system comprising:
a clean water generator;
a clean water pipe to allow clean water generated by the clean water generator to flow to a clean water demand facility;
a first drainage water pipe to allow first drainage water, resulting from usage of the clean water in the clean water demand facility, to flow therethrough;
a purifier connected to the first drainage water pipe to purify the first drainage water; and
a recycled water pipe to allow recycled water obtained by purification of the first drainage water by the purifier to flow to a recycled water demand facility.

2. The independent water use system according to claim 1, further comprising:
a second drainage water pipe to allow second drainage water, resulting from usage of the recycled water in the recycled water demand facility, to flow to the purifier.

3. The independent water use system according to claim 1 or 2, further comprising:
a release pipe to allow at least one of the clean water or the recycled water to be released out of the independent water use system.

4. The independent water use system according to any one of claims 1 to 3, further comprising:
a clean water storage tank connected to the clean water pipe to store the clean water.

5. The independent water use system according to claim 4, further comprising:
a clean water outflow pipe to allow the clean water stored in the clean water storage tank to outflow to somewhere other than the clean water demand facility; and
a clean water outflow device to adjust an outflow rate of the clean water through the clean water outflow pipe.

6. The independent water use system according to claim 5, further comprising:
a recycled water storage tank connected to the recycled water pipe to store the recycled water; wherein
the clean water outflow pipe is configured to allow the clean water stored in the clean water storage tank to outflow to the recycled water storage tank.

7. The independent water use system according to claim 5 or 6, further comprising:
a clean water state detector to detect a state including at least one of a quality or a water level of the clean water stored in the clean water storage tank; wherein
the clean water outflow device is configured to adjust the outflow rate of the clean water based on the state of the clean water detected by the clean water state detector.

8. The independent water use system according to any one of claims 4 to 6, further comprising:
a clean water state detector to detect a state of the clean water stored in the clean water storage tank; wherein
the clean water generator is configured to adjust an amount of the clean water generated thereby based on the state of the clean water detected by the clean water state detector.

9. The independent water use system according to claim 7 or 8, wherein
the clean water state detector includes at least one of (i) a clean water level gauge to detect the water level of the clean water stored in the clean water storage tank or (ii) a clean water quality meter to detect the quality of the clean water stored in the clean water storage tank.

10. The independent water use system according to any one of claims 1 to 3, further comprising:
a plurality of clean water storage tanks connected to the clean water pipe to store the clean water; and
a plurality of clean water inlet devices corresponding to the respective plurality of clean water storage tanks and a plurality of clean water outlet devices corresponding to the respective plurality of clean water storage tanks; wherein
the plurality of clean water inlet devices are each configured to adjust a flow rate of the clean water to flow into a corresponding one of the plurality of clean water storage tanks, and
the plurality of clean water outlet devices are each configured to adjust a flow rate of the clean water to flow out of a corresponding one of the plurality of clean water storage tanks.

11. The independent water use system according to any one of claims 1 to 10, further comprising:
a chlorine addition unit to add chlorine to the clean water.

12. The independent water use system according to any one of claims 1 to 11, wherein
the clean water demand facility is provided at a residence; and
the clean water is at least used as drinking water.

13. The independent water use system according to claim 12, wherein
the clean water pipe is configured to allow the clean water to flow to each of a plurality of the clean water demand facilities; and
the independent water use system further comprises clean water supply amount regulators to adjust flow rates of the clean water to be supplied to the respective plurality of clean water demand facilities independently of each other.

14. The independent water use system according to any one of claims 1 to 13, further comprising:
a recycled water storage tank connected to the recycled water pipe to store the recycled water.

15. The independent water use system according to claim 14, further comprising:
a recycled water outflow pipe to allow the recycled water stored in the recycled water storage tank to outflow to somewhere other than the recycled water demand facility; and
a recycled water outflow device to adjust an outflow rate of the recycled water through the recycled water outflow pipe.

16. The independent water use system according to claim 15, further comprising:
a recycled water state detector to detect a state including at least one of a quality or a water level of the recycled water stored in the recycled water storage tank; wherein
the recycled water outflow device is configured to adjust an outflow rate of the recycled water based on the state of the recycled water detected by the recycled water state detector.

17. The independent water use system according to claim 14 or 15, further comprising:
a recycled water state detector to detect a state of the recycled water stored in the recycled water storage tank; wherein
the purifier is configured to adjust an amount of the recycled water purified thereby based on the state of the recycled water detected by the recycled water state detector.

18. The independent water use system according to claim 16 or 17, wherein
the recycled water state detector includes at least one of (i) a recycled water level gauge to detect the water level of the recycled water stored in the recycled water storage tank or (ii) a recycled water quality meter to detect the quality of the recycled water stored in the recycled water storage tank.

19. The independent water use system according to any one of claims 1 to 18, further comprising:
a plurality of recycled water storage tanks connected to the recycled water pipe to store the recycled water;
a plurality of recycled water inlet devices corresponding to the respective plurality of recycled water storage tanks and a plurality of recycled water outlet devices corresponding to the respective plurality of recycled water storage tanks; wherein
the plurality of recycled water inlet devices are each configured to adjust a flow rate of the recycled water to flow into a corresponding one of the plurality of recycled water storage tanks; and
the plurality of recycled water outlet devices are each configured to adjust a flow rate of the recycled water to flow out of a corresponding one of the plurality of recycled water storage tanks.

20. The independent water use system according to any one of claims 1 to 19, wherein
the purifier includes a recycled water disinfecting tank to disinfect the recycled water.

21. The independent water use system according to any one of claims 1 to 20, wherein
the purifier includes an eliminator to eliminate impurities contained in the recycled water.

22. The independent water use system according to any one of claims 1 to 21, wherein
the recycled water demand facility is provided at a residence; and
the recycled water is used as at least one of washing water, toilet flushing or sprinkling water.

23. The independent water use system according to any one of claims 1 to 22, wherein
the recycled water pipe is configured to allow the recycled water to flow to each of a plurality of the recycled water demand facilities; and
the independent water use system further comprises recycled water supply amount regulators to adjust flow rates of the recycled water to be supplied to the respective plurality of recycled water demand facilities independently of each other.

24. The independent water use system according to any one of claims 1 to 23, which is configured such that heat generated when the clean water generator generates the clean water is used to heat the clean water, the recycled water, or the purifier.

25. The independent water use system according to any one of claims 1 to 24, which is configured such that at least one of the clean water or the recycled water is used as firefighting water.

26. The independent water use system according to any one of claims 1 to 25, further comprising:
a clean water use meter to measure an amount of the clean water used in the clean water demand facility; and
a fee calculator to calculate a fee for usage of the clean water based on the amount of the clean water used.

27. The independent water use system according to any one of claims 1 to 26, further comprising:
a recycled water use meter to measure an amount of the recycled water used in the recycled water demand facility; and
a fee calculator to calculate a fee for usage of the recycled water based on the amount of the recycled water used.

28. The independent water use system according to any one of claims 1 to 25, further comprising:
a clean water use meter to measure an amount of the clean water used in the clean water demand facility;
a recycled water use meter to measure an amount of the recycled water used in the recycled water demand facility; and
a fee calculator to calculate a fee for usage of the independent water use system based on the amount of the clean water used and the amount of the recycled water used.

29. The independent water use system according to any one of claims 1 to 28, further comprising:
a release water meter to measure an amount of a portion of the clean water and the recycled water that is released from the independent water use system; and
a fee calculator to calculate a fee for release based on the amount of the portion of the clean water and the recycled water that is released.

30. The independent water use system according to any one of claims 1 to 25, further comprising:
a clean water use meter to measure an amount of the clean water used in the clean water demand facility;
a recycled water use meter to measure an amount of the recycled water used in the recycled water demand facility;
a release water meter to measure an amount of a portion of the clean water and the recycled water that is released from the independent water use system; and
a fee calculator to calculate a fee for usage of the independent water use system based on the amount of the clean water used, the amount of the recycled water used, and the amount of the portion of the clean water and the recycled water that is released.
